# FASCICULE DE BREVET EUROPEEN

(11) **EP 0 963 389 B1**
(45) Date de publication et mention de la délivrance du brevet: **11.08.2004**
(21) Numéro de dépôt: 98963630.3
(22) Date de dépôt: 24.12.1998
(51) Int. Cl.: C08G 18/38, C08G 18/16, G02B 1/04

(54) **COMPOSITION PHOTOPOLYMERISABLE A BASE DE MONOMERES POLYISO(THIO) CYANATES ET DE MONOMERES A PROTON LABILE, COMPRENANT UN AGENT PHOTOAMORCEUR ET UN AGENT D'ACTIVATION DE LA PHOTOPOLYMERISATION ET ARTICLES D'OPTIQUE AINSI OBTENUS.**
PHOTOPOLYMERISIERBARE ZUSAMMENSETZUNG AUF DER BASIS VON POLYISO(THIO)CYANATMONOMEREN UND MONOMEREN MIT LABILEM PROTON, DIE EINEN PHOTOINITIATOR UND EINEN POLYMERISATIONSAKTIVIERENDEN STOFF ENTHÄLT UND DARAUS HERGESTELLTE OPTISCHE GEGENSTÄNDE
PHOTOPOLYMERISABLE COMPOSITION BASED ON POLYISO(THIO)CYANATE MONOMERS AND MONOMERS WITH LABILE PROTON, COMPRISING A PHOTOINITIATOR AND AN AGENT ACTIVATING POLYMERISATION AND RESULTING OPTICAL ARTICLES

(30) Priorité: 29.12.1997 FR 9716632
(43) Date de publication de la demande: 15.12.1999
(73) Titulaire: ESSILOR INTERNATIONAL COMPAGNIE GENERALE D'OPTIQUE, 94227 Charenton cédex (FR)
(72) Inventeur: WIDAWSKI, Gilles, F-75011 Paris (FR); YEAN, Leanirith, F-91160 Longjumeau (FR); MARCHAND, Jean-Paul, F-94000 Créteil (FR)
(74) Mandataire: Catherine, Alain
(86) Numéro de dépôt international: PCT/FR1998/002872
(87) Numéro de publication internationale: WO 1999/033892

(56) Documents cités:
- EP-A- 0 751 161
- US-A- 4 221 646
- US-A- 5 418 112
- DATABASE WPI Section Ch, Week 9310 Derwent Publications Ltd., London, GB; Class A25, AN 93-080455 XP002073634 & JP 05 025240 A (MITSUBISHI RAYON CO LTD) , 2 février 1993

## Description

La présente invention concerne d'une manière générale une composition photopolymérisable, comprenant au moins un monomère polymérisable à proton labile et au moins un monomère polymérisable comportant un ou plus groupes fonctionnels iso(thio)cyanate, en particulier pour la fabrication d'articles d'optique tels que des verres ophtalmiques organiques ou des vernis de revêtement d'articles d'optique en verre organique.

Les verres ophtalmiques organiques sont plus légers, moins fragiles et plus facilement colorables que les verres minéraux. Par ailleurs, leur procédé de mise en oeuvre est souvent plus facile. Pour ces raisons, les verres ophtalmiques organiques se sont fortement développés ces dernières années.

Ainsi, on utilise couramment pour la fabrication de lentilles ophtalmiques en verre organique un polymère obtenu par polymérisation de bis(allyl carbonate) d'éthylène glycol. Les résines polymérisées obtenues à partir de ce polymère ont d'excellentes propriétés de résistance aux chocs, de colorabilité, et de légèreté.

Néanmoins, l'indice de réfraction des verres organiques obtenus (n_{D} = 1,50) est notablement plus faible que celui des verres minéraux classiques, ce qui implique une augmentation d'épaisseur au centre de la lentille.

Pour remédier à cet inconvénient, on a réalisé des lentilles ophtalmiques en verre organique en polythiouréthanne qui permettent de satisfaire cette exigence.

Ainsi, le brevet US-4 775 733 décrit la fabrication de lentilles organiques à indice de réfraction élevé, obtenues par polymérisation thermique d'un polyisocyanate et d'un polythiol.

Le brevet US-4 689 387 décrit la fabrication d'une résine pour lentilles à base de S-alkyl thiocarbamate, qui consiste à polymériser thermiquement un ou plusieurs composés comportant une ou plusieurs fonctions isocyanate avec un ou plusieurs composés aliphatiques comprenant un ou plusieurs groupes SH.

Le brevet EP-A-0 751 161 décrit quant à lui l'obtention de verres organiques par polymérisation UV d'un composé polythiol et d'un composé polyiso(thio)cyanate, et un composé ayant deux ou plusieurs groupes insaturés réactifs et un catalyseur de photopolymérisation. Bien que ce document indique que la composition puisse être polymérisée en une courte période de temps, même par photopolymérisation, tous les exemples de ce document concernent une polymérisation mixte comprenant une prépolymérisation par irradiation UV d'au moins 15 minutes suivie d'une polymérisation thermique d'au moins 2 heures.

Il serait donc souhaitable de disposer de compositions pour la fabrication de verres organiques, en particulier de verres organiques d'indice de réfraction élevé (> 1,54), qui puissent être rapidement photopolymérisées, en particulier par polymérisation UV.

La présente invention a donc pour objet de fournir une composition de monomères, en particulier pour la fabrication d'articles d'optique, qui soit rapidement photopolymérisable.

La présente invention a plus particulièrement pour objet de fournir des compositions photopolymérisables, en particulier pour la fabrication de verres organiques, comportant des monomères à proton labile et à fonction iso(thio)cyanate, qui soient aisément et rapidement photopolymérisables.

La présente invention a encore pour objet des compositions telles que définies ci-dessus, pour la fabrication de verres organiques à indice de réfraction élevé (supérieur à 1,54).

L'invention a également pour objet des articles d'optique et en particulier des lentilles ophtalmiques obtenues par photopolymérisation des compositions ci-dessus.

On a trouvé, de façon surprenante, qu'en ajoutant un agent d'activation spécifique à une composition photopolymérisable comprenant au moins un monomère à proton labile et au moins un monomère comportant un ou plusieurs groupes fonctionnels iso(thio)cyanate et un agent photoamorceur, il était possible d'obtenir des compositions photopolymérisables en un temps très court.

Plus particulièrement, on a trouvé qu'en ajoutant un agent d'activation choisi parmi les phosphines et les halogénures de phosphore aux compositions à base de monomères à proton labile et à fonction iso(thio)cyanate comprenant un photoamorceur de polymérisation classique, on obtenait de façon très surprenante une accélération exceptionnelle de la photopolymérisation de la composition, en particulier sous l'action d'un rayonnement ultraviolet.

Selon l'invention, les compositions photopolymérisables comprennent au moins un monomère polymérisable à protons labiles et au moins au monomère polymérisable comportant un ou plus groupes fonctionnels iso(thio)cyanate et un agent photoamorceur, et se caractérisent en ce qu'elles comprennent au moins un agent d'activation de l'agent photoamorceur choisi parmi les phosphines, les halogénures de phosphore et leurs mélanges.

Les phosphines sont des composés trivalents du phosphore et les halogénures de phosphore entrant dans le cadre de la présente invention sont de préférence des composés du phosphore dans lesquels l'atome de phosphore est trivalent.

Des phosphines convenant dans la présente invention peuvent être représentées par la formule (R)₃₋ₓPHₓ (I), dans laquelle les radicaux R, identiques ou différents, représentent un radical alkyle linéaire ou ramifié, un radical cycloalkyle non-substitué ou substitué, un radical alcényle linéaire ou ramifié, un radical cycloalcényle non-substitué ou substitué, un radical aryle non-substitué ou substitué, un radical (alkyl)aryle non-substitué ou substitué, un radical (aryle non-substitué ou substitué)alkyle, et x est un entier égal à 0, 1 ou 2.

Dans la présente demande, on entend par agent activateur tout composé ou mélange de composés qui, combiné avec l'agent photoamorceur du mélange polymérisable, accroît la vitesse de photopolymérisation du mélange par rapport à la vitesse de polymérisation de ce même mélange ne comportant pas l'agent activateur et soumis aux mêmes conditions de photopolymérisation.

Un premier constituant monomère polymérisable des compositions selon l'invention comprend un ou plusieurs monomères polymérisables à proton labile.

On entend, dans la présente invention, par monomère polymérisable à proton labile, tout monomère comportant une ou plusieurs fonctions ayant au moins un atome d'hydrogène labile.

De préférence; les monomères à proton labile, selon l'invention, sont exempts de groupement insaturé polymérisable par voie radicalaire.

Les composés à proton labile de la présente invention recommandés sont les composés comportant des fonctions thiol (SH), alcool (OH) et amine primaire ou secondaire (NH₂ ; NH) ou des combinaisons de ces groupes fonctionnels.

Parmi les composés à proton labile recommandés dans la présente invention, on peut citer les polythiols aliphatiques, les polythiols aromatiques, les polythiols aromatiques halogénés, les polythiols hétérocycliques. De nombreux exemples de ces polythiols utilisables dans la présente invention sont donnés dans le brevet EP-A-0 751 161.

Parmi les polythiols recommandés selon la présente invention, on peut citer les polythiols aliphatiques tels que le pentaérythritol tétrakis (3-mercaptopropionate).

Une classe recommandée de polythiols aliphatiques répond à la formule (II) : 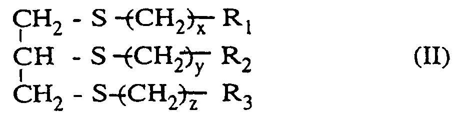 dans laquelle, R₁, R₂, R₃ représentent H ou SH, x, y et z sont des nombres entiers compris entre 0 et 8, de préférence entre 1 et 4, et au moins deux de R₁, R₂ et R₃ représentent un groupe SH.

Parmi les composés de formule (II) ci-dessus, on peut citer le 1-(1'-mercaptoéthylthio)-2,3-dimercaptopropane, le 1-(2'-mercaptopropyl thio)-2,3-dimercaptopropane, le 1-(3'-mercaptopropylthio)-2,3-dimercaptopropane, le 1-(4'-mercaptobutylthio)-2,3-dimercaptopropane, le 1-(5'-mercaptopentylthio)-2,3-dimercaptopropane, le 1-(6'-mercaptohexyl thio)-2,3-dimercaptopropane, le 1,2-bis(1'-mercaptométhylthio)-3-mercaptopropane, le 1,2-bis(2'-mercaptoéthylthio)-3-mercaptopropane, le 1,2-bis(3'-mercaptopropylthio)-3-mercaptopropane, le 1,2-bis(4'-mercaptobutylthio)-3-mercaptopropane, le 1,2-bis(5'-mercaptopentyl thio)-3-mercaptopropane, le 1,2-bis(6'-mercaptohexylthio)-3-mercapto propane, le 1,2,3-tris(1'-mercaptométhylthio)propane, le 1,2,3-tris(2'-mercaptoéthylthio)propane, le 1,2,3-tris(3'-mercaptopropylthio) propane, le 1,2,3-tris(4'-mercaptobutylthio)propane, le 1,2,3-tris(5'-mercaptopentylthio)propane et le 1,2,3-tris(6'-mercaptohexylthio) propane.

Un polythiol de formule (II) particulièrement recommandé dans la présente invention est le 1,2bis(2'-mercaptoéthylthio)-3-mercapto propane [ou 4-mercaptométhyl-3,6-dithia-1,8-octanedithiol (MDO)].

Ces composés de formule (II) sont décrits plus amplement dans le brevet EP-A-0 751 161.

Une autre classe recommandée de polythiols monomères sont les polythiols répondant à la formule : 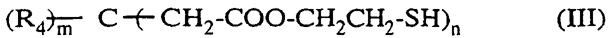 dans laquelle R₄ est un groupe alkyle en C₁-C₅, de préférence un groupe CH₃ ou C₂H₅, un goupe halogéno alkyle en C₁-C₅, de préférence un groupe halogéno méthyle ou éthyle, l'halogène étant de préférence le brome, et les halogènes, de préférence le brome, m est un entier de 0 à 2 et n = 4 - m.

Parmi les monomères à proton labile comportant des fonctions alcool, on peut citer les polyols, par exemple les diols tels que le butanediol et l'hexanediol, les alkylèneglycols tels que l'éthylèneglycol, le triéthylèneglycol, le propylèneglycol, le dipropylèneglycol, les polyéthylèneglycols, les polyphénols tels que les diphénols, les bisphénols tels que le bisphénol-A, les bisphénols hydrogénés tels que le bisphénol-A hydrogéné, les produits d'addition de bisphénol et d'oxyde d'alkylène tels que les produits d'addition de bisphénol-A-oxyde d'éthylène, de bisphénol-A-oxyde de propylène, les triols tels que le triméthylolpropane, le triméthyloléthane, et les polyols comportant quatre fonctions alcool ou plus tels que le pentaérythritol, le dipentaérythritol, le glycérol et le sorbitol.

Parmi les composés à fonction amine utiles dans la présente invention, on peut citer les alkyldiamines, les alkyltriamines et des arylamines tels que la phényldiamine, la phényltriamine, les composés 1,6-hexanediamine; 1,2- et 1,3-propanediamine; 1,3-diaminocyclohexane; 4,4'-diméthyl 1,7-heptanediamine; 4,4'-méthylène dianiline; xylylènediamine; 2-méthylpipérazine; 2,6-diméthylpipérazine; bis-p-aminocyclohexylméthane.

Le ou les monomères polymérisables à proton labile représentent en général 30 à 70% en poids par rapport au poids total des monomères polymérisables de la composition, de préférence 40 à 60% en poids.

Le second constituant monomère de la composition photopolymérisable selon l'invention est constitué par un ou plusieurs monomères polymérisables, comportant un ou plusieurs groupes fonctionnels iso(thio)cyanate.

De préférence, les monomères polymérisables à groupes fonctionnels iso(thio)cyanate de l'invention comprennent deux ou trois groupes fonctionnels iso(thio)cyanate, et tout particulièrement deux groupes fonctionnels iso(thio)cyanate.

De préférence, les monomères polymérisables à groupes fonctionnels iso(thio)cyanate sont exempts de groupement insaturé polymérisable par voie radicalaire.

Les composés polyiso(thio)cyanate qui peuvent être utilisés dans les compositions de la présente invention, comprennent les composés polyisocyanates et les composés polyisothiocyanates.

Parmi les composés polyisocyanates qui peuvent être utilisés dans les compositions de l'invention, on peut citer les polyisocyanates aliphatiques, les polyisocyanates alicycliques, les polyisocyanates aromatiques, les polyisocyanates de type sulfure aromatique et les amides sulfoniques aromatiques.

On peut également utiliser dans la présente invention des dérivés halogénés tels que des dérivés chlorés et bromés, des dérivés alkylés, des dérivés alcoxylés, des dérivés nitrés, des produits d'addition de type prépolymère avec des polyols, des dérivés modifiés au moyen de carbodiimide, des dérivés modifiés par l'urée, des dérivés modifiés par le biuret, et des produits dimérisés ou trimérisés des composés polyisocyanates ci-dessus.

Des dérivés polyisocyanates convenant pour la présente invention sont en particulier décrits dans le brevet EP-A-0 751 161.

Une classe recommandée de monomères polyisocyanates sont ceux répondant à la formule (IV) : 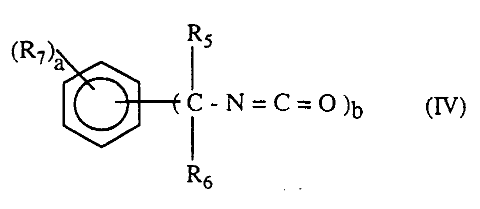 dans laquelle les radicaux R₅ et R₆, identiques ou différents, représentent H ou CH₃, R₇ représente H, Cl, Br, CH₃ ou C₂H₅, a est un entier de 1 à 4 et b est un entier de 2 à 4, la somme a+b étant égale à 6.

Parmi les polyisocyanates recommandés dans la présente invention, on peut citer le diisocyanate de phénylène, le diisocyanate de tolylène, le diisocyanate d'éthylphénylène, le diisocyanate d'isopropylphénylène, le diisocyanate de diméthylphénylène, le diisocyanate de diéthylphénylène, le diisocyanate de diisopropylphénylène, le triisocyanate de triméthylbenzène, le triisocyanate de benzène, le diisocyanate de naphtalène, le diisocyanate de méthylnaphtalène, le diisocyanate de xylylène, le diisocyanate d'α,α,α',α'-tétraméthylxylylène, le diisocyanate de 4,4'-diphénylméthane, le diisocyanate d'hexaméthylène, le diisocyanate de dicyclohexylméthane, le diisocyanate d'isophorone et de la bis(isocyanatométhyl)cyclohexane.

Les polyisocyanates recommandés sont les polyisocyanates aromatiques.

Le polyisocyanate préféré selon la présente invention est le diisocyanate de xylylène.

Les composés polyisothiocyanates qui peuvent être utilisés dans les compositions de la présente invention comportent de préférence deux ou trois groupes isothiocyanate et tout particulièrement deux groupes isothiocyanate dans la molécule et peuvent également comporter un ou plusieurs atomes de soufre en plus des groupes isothiocyanate.

Parmi les composés polyisothiocyanates utiles dans la présente invention, on peut citer les polyisothiocyanates aliphatiques, les polyisothiocyanates aromatiques et polyisothiocyanates hétérocycliques, les polyisothiocyanates carbonyle, les polyisothiocyanates aliphatiques renfermant du soufre, et les polyisothiocyanates aromatiques contenant du soufre.

On peut également utiliser des dérivés halogénés tels que des dérivés chlorés et bromés, des dérivés alkylés, des dérivés alcoxylés, des dérivés nitrés, des produits d'addition de type prépolymère avec des polyols, des dérivés modifiés au moyen de carbodiimide, des dérivés modifiés au moyen d'urée, des dérivés modifiés au moyen de biuret et des produits dimérisés et trimérisés des composés polyisothiocyanates mentionnés précédemment.

On peut encore utiliser des composés polyisothiocyanates contenant des groupements isocyanate, par exemple des composés aliphatiques et alicycliques ou encore aromatiques.

Comme précédemment, on peut encore utiliser des dérivés halogénés, par exemple des dérivés chlorés et bromés, des dérivés alkylés, alcoxylés, nitrés, des produits d'addition de type prépolymère avec des polyols et des dérivés modifiés avec du carbodiimide, de l'urée ou du biurée, et les produits dimérisés ou trimérisés de ces composés polyisothiocyanates contenant des groupements isocyanate.

Des composés polyisothiocyanates sont décrits entre autres dans le brevet EP-A-0 751 161.

Les composés polyisothiocyanates utiles dans la présente invention peuvent être utilisés seuls ou sous forme de mélange d'un ou plus de ceux-ci.

Le ou les monomères à groupe fonctionnel iso(thio)cyanate représentent généralement de 30 à 70% en poids, de préférence 40 à 60% en poids des monomères photopolymérisables présents dans la composition photopolymérisable.

Les compositions photopolymérisables selon l'invention peuvent également, le cas échéant, comporter un ou plusieurs monomères photopolymérisables comportant un ou plusieurs groupes insaturés réactifs, de préférence deux ou plus groupes insaturés.

Parmi les monomères comportant deux ou plusieurs groupes insaturés réactifs par molécule qui peuvent être utilisés dans la présente invention, on peut citer les composés comportant un ou plusieurs groupes acrylique, thioacrylique, méthacrylique, thiométhacrylique, vinyle et allyle. Dans les composés qui comportent plusieurs groupes insaturés réactifs, les groupes insaturés réactifs peuvent être identiques ou différents.

Parmi ces composés, on peut citer des composés d'acétone, tels que le diallylidène pentaérythritol et le triallylidène sorbitol, des composés de bisphénol tels que des bisphénols ayant au moins deux groupes vinyle, acryloyle, méthacryloyle, thioacryloyle, thiométhacryloyle, allyloxy, allylcarbonate ou analogues dans la molécule, des dérivés de l'acide isocyanurique tels que les dérivés d'acide isocyanurique comportant deux ou plus groupes acryloyle, thioacryloyle, méthacryloyle, thiométhacryloyle, allyloxy et allylcarbonate, les composés de triazine tels que des composés de triazine comportant au moins deux groupes acryloyle, thioacryloyle, méthacryloyle, thiométhacryloyle, allyloxy et allylcarbonate, des dérivés de polyol ou de polythiol, tels que des dérivés de polyol et de polythiol obtenus par réaction d'un polyol ou d'un polythiol avec l'acide acrylique, l'acide méthacrylique, le chloroformiate d'allyle, l'alcool allylique, l'allyle halogéné, l'acrylate de glycidyle et le méthacrylate de glycidyle, des esters d'allyle et de métallyle d'acides carboxyliques polyvalents tels que par exemple le phtalate de diallyle, les orthophtalates de diallyle, le succinate de diallyle, les composés vinyliques tels que le divinyl benzène, le trivinyl benzène, le divinylcyclohexane, le trivinylcyclohexane, le vinylcyclohexane, le divinyléther, l'hydroxyméthylstyrène, le mercaptométhylstyrène et l'adipate de divinyle, les produits de réaction de polyisocyanate tels que le xylylène diisocyanate avec des alcools ayant des liaisons insaturés tels que l'alcool allylique et l'hydroxyéthyl (méth)acrylate, des composés polyoléfiniques tels que le dicyclo pentadiène ou le dibutène, des esters d'acide (méth)acrylique ou thio(méth)acrylique, des composés diallyliques tels que l'éther de diallyle, le sulfure de diallyle et le disulfure de diallyle.

Des composés à groupes insaturés réactifs convenant pour la présente invention sont en particulier décrits dans le brevet EP-A-0 751 161.

Des composés thio(méth)acryliques utilisables sont mentionnés en particulier dans la demande de brevet EP-745 620.

Lorsqu'ils sont présents, ce ou ces composés à groupes insaturés réactifs représentent en général de 30 à 70% en poids, de préférence 30 à 50% en poids par rapport au poids total des monomères photopolymérisables présents dans la composition.

Dans les compositions photopolymérisables préférées selon l'invention, le ou les monomères photopolymérisables à proton labile, en particulier les polythiols, représentent environ 50% en poids par rapport au poids total des monomères présents dans la composition.

Les compositions photopolymérisables selon l'invention comprennent également un agent photoamorceur qui peut être tout photoamorceur ou mélange de photoamorceurs classiquement utilisés pour amorcer la photopolymérisation des monomères photopolymérisables.

Ces photoamorceurs sont tous composés producteurs de radicaux libres sous irradiation, que ce soit par lui-même ou par coopération avec un autre composé donneur de proton. C'est-à-dire que les photoamorceurs utiles dans la composition de la présente invention peuvent être aussi bien du type photoclivable que du type photoactivable.

Un photoamorceur photoclivable comprend un ou plusieurs composés qui fonctionnent en générant directement un ou plusieurs radicaux libres amorceurs de polymérisation, tandis qu'un photoamorceur photoclivable est formé d'un système produisant de tels radicaux par une réaction d'oxydoréduction photoassistée entre un composé absorbeur de lumière et un donneur d'hydrogène ou d'électron, tous deux présents dans le système.

Bien évidemment, on peut utiliser des mélanges des deux types des photoamorceurs.

Parmi les photoamorceurs photoclivables, on peut citer les dérivés d'acétophénone, tels que la 4-phénoxy dichloro acétophénone, la 4-t-butyl dichloro acétophénone, la 4-t-butyl trichloro acétophénone, la diéthoxy acétophénone, le 2-hydroxy 2-méthyl 1-phényl propane 1-one (DAROCURE® 1173), la benzoïne et les dérivés de benzoïne, en particulier les éthers de benzoïne tels que le méthyl éther de benzoïne, l'éthyl éther de benzoïne, l'isopropyl éther de benzoïne, l'isobutyl éther de benzoïne, la 1-hydroxy cyclohexyl phényl cétone (IRGACURE® 184) et la benzyl méthyl cétone, les oxydes de phosphine, les dérivés de benzoyloxime et le benzile.

A titre d'exemple, on peut citer
- le CGI® 819 [bis(2,4,6-triméthyl benzoyl)phényl phosphine oxyde] ;
- le CGI® 1850 : mélange (50/50 en poids) du bis(2,6-diméthoxy benzoyl)-2,4,6 triméthyl pentyl phosphine oxyde et d'Irgacure® 184;
- le CGI® 1700 : mélange renfermant 75% en poids de Darocure® 1173 et 25% en poids de bis(2,6-diméthoxy benzoyl)-2,4,6 triméthyl pentyl phosphine oxyde.

Parmi les photoamorceurs photoactivables, on peut citer les dérivés de benzophénone tels que la benzophénone, l'acide benzoyl benzoïque, le benzoyl benzoate de méthyle, la 4-phényl benzophénone et l'hydroxybenzophénone, les dérivés de benzyle, les dérivés de xanthone, les dérivés d'anthrone, les dérivés de thioxanthone tels que la thioxanthone, la 2-chlorothioxanthone, la 2-méthyl thioxanthone et la 2,4-diméthyl thioxanthone, les dérivés de fluorénone, les dérivés de subérone, les acides phosphine et leurs mélanges.

De préférence, on utilise des photoamorceurs du commerce, en particulier le DAROCURE® 1173, l'IRGACURE® 184, le CGI® 1700 et le CGI® 819 et le benzile.

L'agent photoamorceur est généralement utilisé dans une proportion de 0,01 à 5%, de préférence 0,05 à 0,5% en poids, par rapport au poids total des monomères photopolymérisables présents dans la composition.

Les compositions selon l'invention peuvent également comprendre un catalyseur classique de condensation des uréthanes ou thiouréthanes tel que le dibutyldilaurate d'étain, dans des concentrations variables, de généralement 20 à 2000 ppm.

Un tel catalyseur n'est cependant, et bien évidemment, pas indispensable à la mise en oeuvre de l'invention.

Des compositions polymérisables, selon l'invention, conduisent en des temps très courts à un polymère transparent durci, de qualité optique, en l'absence d'un tel catalyseur de condensation classique.

Une première classe d'agents d'activation selon la présente invention, sont les phosphines de formule (R)₃₋ₓPHₓ (I), où R et x sont tels que définis ci-dessus.

De préférence, le radical R de ces phosphines est choisi parmi les radicaux alkyle linéaires ou ramifiés en C₁-C₆, mieux en C₁-C₃, les radicaux alcényle, linéaires ou ramifiés en C₂-C₆, mieux en C₂-C₃, les radicaux aryle en C₆-C₁₄, substitués ou non-substitués, en particulier le radical phényle et le radical phényle substitué, les radicaux (alkyle C₁-C₆) aryle en C₆-C₁₄, mieux les radicaux (alkyle C₁-C₃)phényle, et plus particulièrement les radicaux (alkyle C₁-C₃)phényle comportant un seul groupe alkyl en position para, et les radicaux (aryle C₆-C₁₄ substitués ou non-substitués)alkyle en C₁-C₆.

Les substituants des groupes substitués sont généralement choisis parmi les groupes alkyles, de préférence en C₁-C₄, halogènes, de préférence Br et Cl, amino, hydroxyle, alcoxy, cyano.

De préférence encore, dans les agents d'activation phosphines selon l'invention, x est égal à 0 ou 1, mieux est égal à 0.

Des phosphines recommandées sont les tri(aryl)phosphines, en particulier les tri(aryl)phosphines comportant des groupes aryles substitués.

De préférence encore, le groupe aryle substitué est un groupe phényle comportant au moins un substituant attracteur d'électrons, par exemple un substituant halogéno tel que Cl ou F.

Parmi les phosphines particulièrement recommandées, selon l'invention, on peut citer les trialkylphosphines telles que la triméthylphosphine, la triéthylphosphine, les arylalcénylphosphines telles que la diphénylvinylphosphine et la diphénylallylphosphine, les arylalkylphosphines telles que la diphénylpropylphosphine, les triarylphosphines telles que la triphénylphosphine, la tris(4-méthoxyphényl)phosphine, la tris(4-méthylphényl)phosphine, les tri(haloaryl)phosphines telles que la tris(4-chlorophényl)phosphine et la tris(4-fluorophényl)phosphine, les aryl(alkyl)arylphosphines telles que la diphényl(p-tolyl)phosphine, et leurs mélanges.

Une autre classe d'agents d'activation convenant pour la présente invention, sont les halogénures de phosphore, en particulier les trihalogénures de phosphore.

Les halogénures de phosphore peuvent être des fluorures, des chlorures, des bromures ou des iodures ou des halogénures mixtes de phosphore.

Les halogénures de phosphore recommandés sont les trifluorures, trichlorures, tribromures et triiodures de phosphore, tout particulièrement le tribromure de phosphore.

Bien évidemment, on peut également utiliser comme agents d'activation un mélange des différents halogénures de phosphore ou des différentes phosphines ou d'halogénures de phosphore et de phosphine.

L'agent d'activation est généralement utilisé dans les compositions selon l'invention, basé sur 100 parties en poids de monomères photopolymérisables, à raison de 0,01 à 10 parties en poids, de préférence 0,05 à 1 partie en poids.

Comme indiqué précédemment, une caractéristique essentielle de l'invention est la présence dans le mélange d'un agent d'activation de l'agent photoamorceur.

Les compositions selon l'invention peuvent en outre contenir tout adjuvant classiquement utilisé pour la fabrication des verres organiques tels que des agents de démoulage internes, des extendeurs de chaîne, des agents de réticulation, des stabilisants vis-à-vis de la lumière, des absorbeurs UV, des antioxydants, des colorants et des pigments, et des charges.

Les verres organiques des lentilles ophtalmiques selon l'invention sont généralement obtenus par un procédé de photopolymérisation par coulage.

La composition photopolymérisable, comprenant les divers ingrédients, est généralement coulée dans un moule en verre (en général minéral) en deux parties puis est irradiée au moyen d'un rayonnement UV pour photopolymériser la composition. Après polymérisation, les deux parties de moule sont désassemblées et l'article d'optique, par exemple une lentille ophtalmique, est récupéré.

Dans les exemples suivants, sauf indication contraire, toutes les parties et pourcentages sont exprimés en poids par rapport au poids total de monomères présents dans les compositions.

### EXEMPLE 1

On a préparé, en mélangeant les ingrédients appropriés, les mélanges indiqués dans le tableau I ci-dessous.

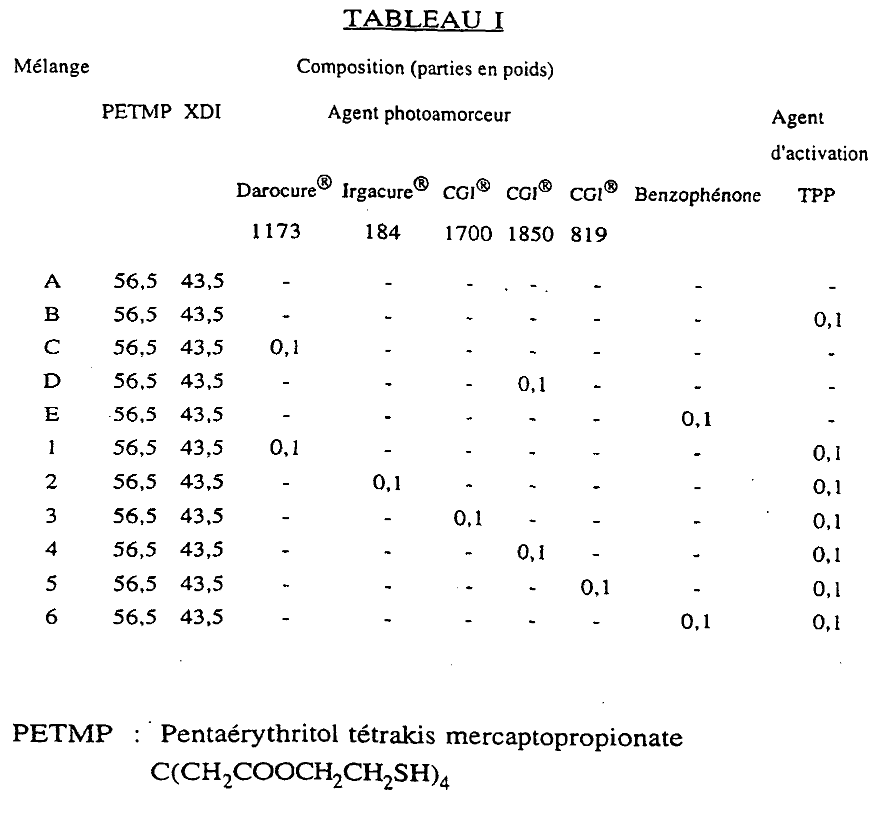

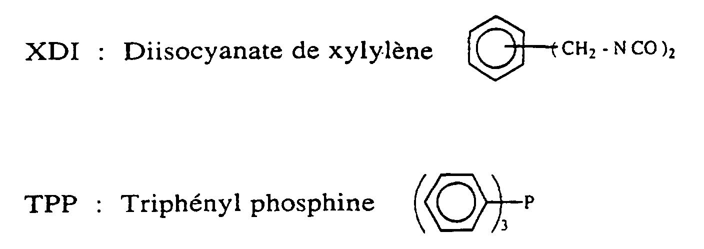

On a coulé les mélanges du tableau I dans un moule en deux parties (l'une en plastique, l'autre en verre, pour faciliter le désassemblage) et on a, d'une part, polymérisé les mélanges coulés par chauffage à 100°C pendant 2 heures et, d'autre part, par irradiation UV dans un four classique Fusion, IST, Dr Hoenle, comportant deux lampes d'énergie 70 mW/cm², pendant 2 minutes.

On a caractérisé la polymérisation des mélanges par spectrographie infrarouge en observant la disparition des bandes NCO et SH et l'apparition des fonctions NH et COS.

Les résultats sont indiqués dans le tableau II ci-dessous.

**TABLEAU II**

| Mélange n° | Chauffage 100°C - 2 heures | UV 2 minutes - 70 mW/cm² |
|---|---|---|
| A | Pas de polymérisation | Pas de polymérisation |
| B | Pas de polymérisation | Pas de polymérisation |
| C | Pas de polymérisation | Pas de polymérisation |
| D | Pas de polymérisation | Pas de polymérisation |
| E | Pas de polymérisation | Pas de polymérisation |
| 1 | Pas de polymérisation | Polymérisation |
| 2 | Pas de polymérisation | Polymérisation |
| 3 | Pas de polymérisation | Polymérisation |
| 4 | Pas de polymérisation | Polymérisation |
| 5 | Pas de polymérisation | Polymérisation |
| 6 | Pas de polymérisation | Polymérisation |

Le tableau II montre qu'il n'y a pas de polymérisation thermique dans les conditions de polymérisation choisies, et que les mélanges A à C, qui ne comportent pas le mélange photoamorceur agent d'activation, et qui sont donc en-dehors du cadre de la présente invention, ne polymérisent pas par irradiation UV dans les conditions de l'exemple. Par contre, on obtient une polymérisation extrêmement rapide des mélanges 1 à 4 selon l'invention.

Les polymères obtenus dans cet exemple sont durs, transparents, incolores et ne présentent pas d'odeur (ce qui confirme la conversion totale du système).

### EXEMPLE 2

En procédant comme indiqué à l'exemple 1, on a réalisé les mélanges du tableau III ci-dessous et polymérisé ces mélanges comme dans l'exemple 1 avec les résultats indiqués dans le tableau IV ci-dessous.

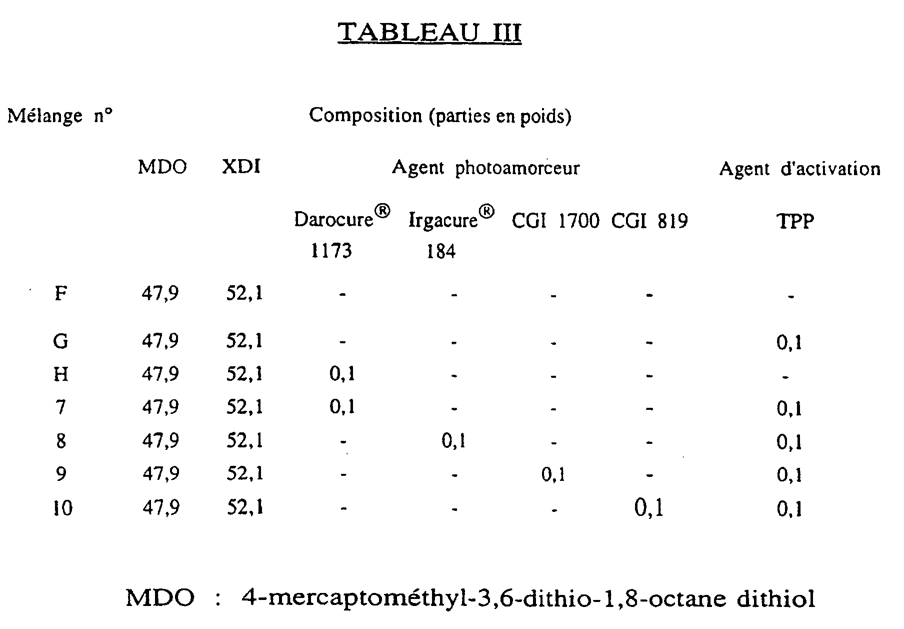

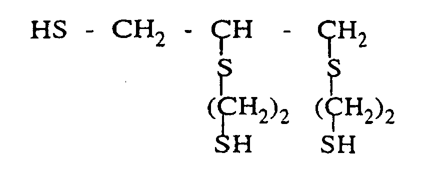

**TABLEAU IV**

| Mélange n° | Chauffage 100°C - 2 heures | UV 2 minutes - 70 mW/cm² |
|---|---|---|
| F | Pas de polymérisation | Pas de polymérisation |
| G | Pas de polymérisation | Pas de polymérisation |
| H | Pas de polymérisation | Pas de polymérisation |
| 7 | Pas de polymérisation | Polymérisation |
| 8 | Pas de polymérisation | Polymérisation |
| 9 | Pas de polymérisation | Polymérisation |
| 10 | Pas de polymérisation | Polymérisation |

Comme le montre le tableau IV, les mélanges ne comportant pas d'agent d'activation selon l'invention ne photopolymérisent pas, cependant que les compositions 7 à 10 selon l'invention polymérisent en un temps très court.

Les polymères obtenus sont durs, transparents, incolores et ne présentent pas d'odeur (ce qui confirme la conversion totale du système).

### EXEMPLE 3

En procédant comme dans l'exemple 1, on réalise les mélanges du tableau V ci-dessous, que l'on fait polymériser avec les résultats indiqués dans le tableau VI ci-après.

**TABLEAU V**

| Mélange n° | Composition (parties en poids) | | | | | | |
|---|---|---|---|---|---|---|---|
| | PETMP | DCHDI | Agent photoamorceur | | | | Agent d'activation |
| | | | Darocure® 1173 | Irgacure® 184 | CGI 1700 | CGI 819 | TPP |
| I | 39,8 | 60,2 | - | - | - | - | - |
| J | 39,8 | 60,2 | - | - | - | - | 0,1 |
| K | 39,8 | 60,2 | 0.1 | - | - | - | - |
| 11 | 39,8 | 60,2 | 0,1 | - | - | - | 0,1 |
| 12 | 39,8 | 60,2 | - | 0,1 | - | - | 0,1 |
| 13 | 39,8 | 60,2 | - | - | 0,1 | - | 0,1 |
| 14 | 39,8 | 60,2 | - | - | - | 0,1 | 0,1 |
| DCHDI : Dicyclohexylméthane-4,4'-diisocyanate OCN - C₆H₈ - CH₂ - C₆H₈ - NCO | | | | | | | |

**TABLEAU VI**

| Mélange n° | Chauffage 100°C - 2 heures | UV 2 minutes - 70 mW/cm² |
|---|---|---|
| I | Pas de polymérisation | Pas de polymérisation |
| J | Pas de polymérisation | Pas de polymérisation |
| K | Pas de polymérisation | Pas de polymérisation |
| 11 | Pas de polymérisation | Polymérisation |
| 12 | Pas de polymérisation | Polymérisation |
| 13 | Pas de polymérisation | Polymérisation |
| 14 | Pas de polymérisation | Polymérisation |

Les polymères obtenus sont durs, transparents, incolores et ne présentent pas d'odeur (ce qui confirme la conversion totale du système).

### EXEMPLE 4

En procédant comme dans l'exemple 1, on réalise des mélanges comprenant 56,5 parties en poids de PETMP, 43,5 parties en poids de XDI, 0,1 partie en poids de photoamorceur DAROCURE® 1173 et 0,1 partie en poids de différents composés A identifiés dans le tableau VII ci-après.

Les mélanges ont été réalisés en dissolvant initialement les composés A dans XDI, puis le photoinitiateur. Ensuite, on ajoute le mercaptan. En procédant ainsi, on peut déterminer l'effet de chacun des constituants séparément. On soumet alors les différents mélanges à une polymérisation par irradiation UV comme décrit dans l'exemple 1.

Les résultats sont donnés dans le tableau VII ci-dessous.

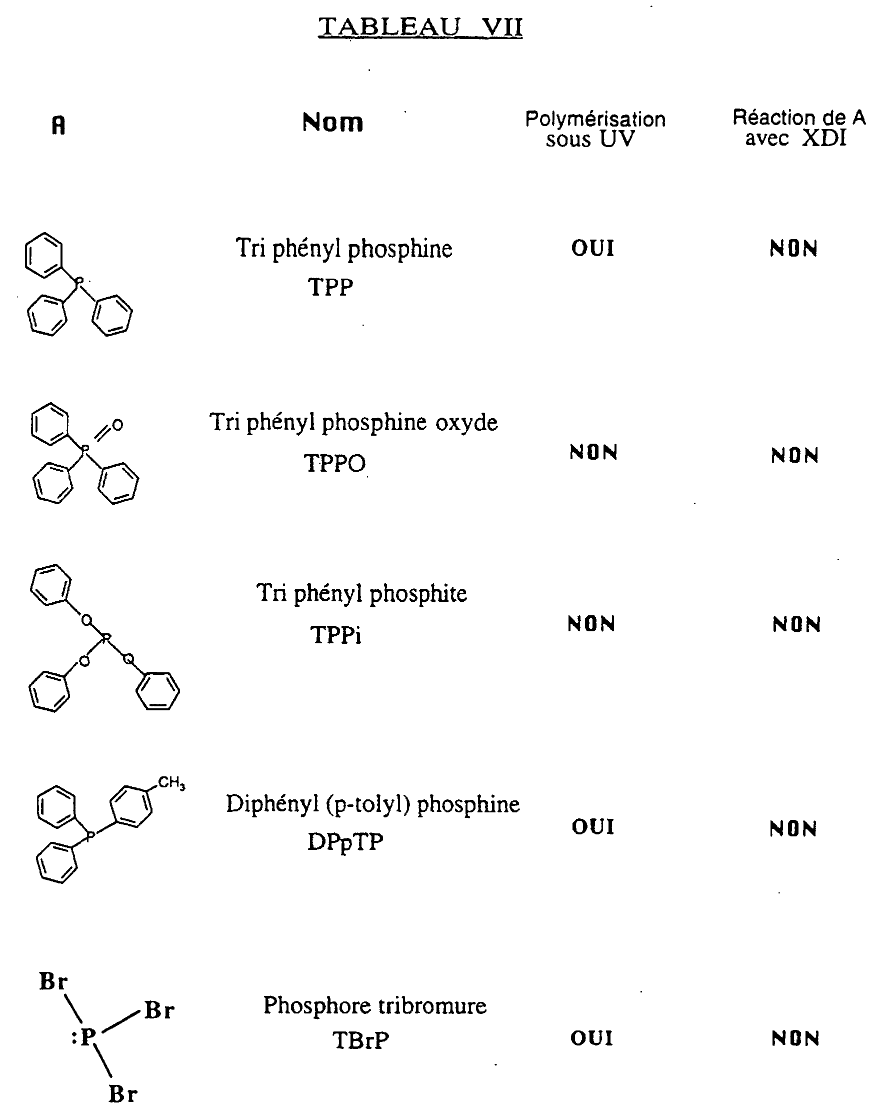

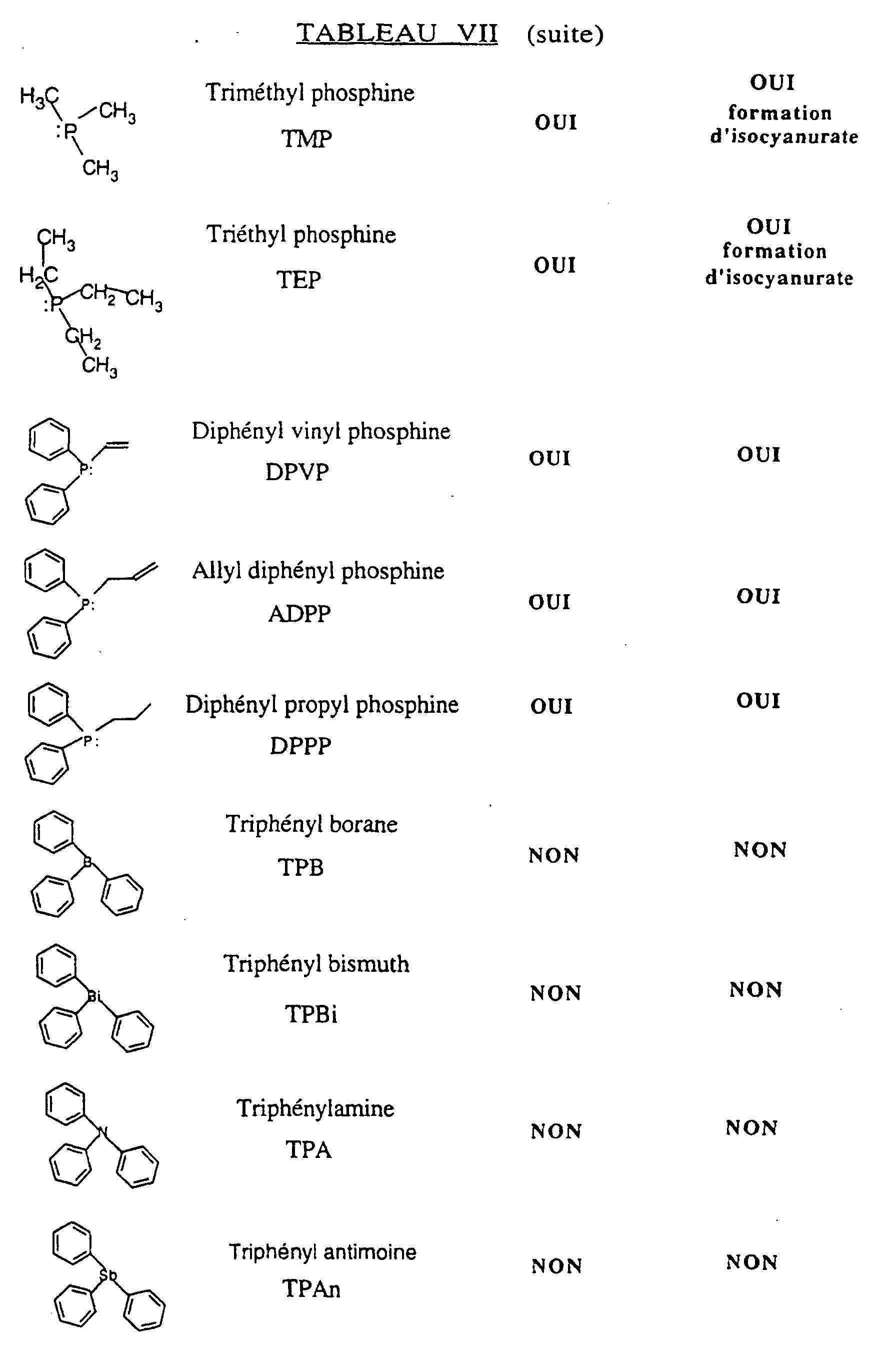

Dans le cas des dérivés arylphosphine du type triphényl phosphine, on n'observe pas de réaction parasite. La seule réaction identifiée est la réaction polyiso(thio)cyanate/composé à proton labile.

Dans le cas où l'agent activateur est une phosphine comportant au moins un groupe alkyle, une réaction secondaire peut se produire (isomérisation des isocyanates en isocyanurates), mais celle-ci reste limitée et la réaction conduit cependant à des verres transparents de qualité optique.

Cette réaction secondaire, exothermique, présente cependant l'avantage d'activer la réaction polyiso(thio)cyanate/composé à proton labile. Dans ce cas, la réaction peut se produire à température extérieure ambiante et en l'absence d'une quelconque irradiation.

### EXEMPLE 5

En procédant comme à l'exemple 1, on a réalisé le mélange suivant :

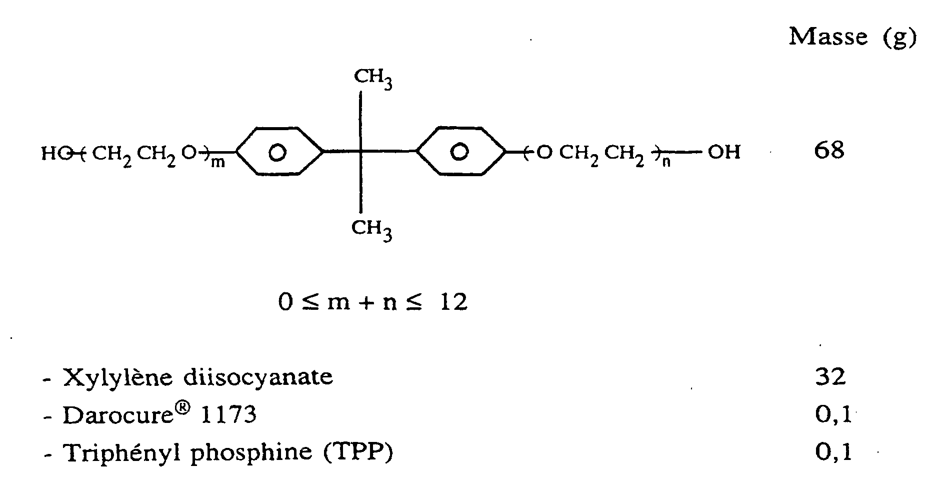

et on a polymérisé ce mélange comme indiqué dans l'exemple 1.

On mesure le taux de conversion.

Celui-ci atteint 50% après deux minutes d'irradiation.
A titre comparatif, on reproduit la même manipulation que ci-dessus en l'absence de TPP.

Le taux de conversion de 50% n'est atteint qu'au bout de 40 minutes.

### EXEMPLE 6

En procédant comme à l'exemple 1, on a réalisé les mélanges selon l'invention comme indiqués dans le tableau VIII ci-dessous, et on expose les mélanges à la lumière UV pendant 1 minute (FUSION LAMP F450 à ampoule V) avant de les traiter thermiquement à 130°C pendant 2 heures.

On a estimé les pourcentages de gel par pesée après irradiation UV. Les résultats sont donnés dans le tableau VIII.

**TABLEAU VIII**

| Mélange n° | Composition (parties en poids) | | | | | |
|---|---|---|---|---|---|---|
| | PETMP | XDI | Agent d'activation | Agent photoamorceur | | |
| | | | TPP | Darocure® 1173 | Benzile | Gel (%) |
| 15 | 56,5 | 43,5 | 0,3 | 0,31 | - | 100 |
| 16 | 56,5 | 43,5 | 0,1 | - | 0.1 | 95 |
| 17 | 56,5 | 43,5 | 0,3 | - | 0,38 | 100 |

### EXEMPLE 7

On réalise les mélanges du tableau IX ci-après et on les soumet à une irradiation UV comme dans l'exemple 6. On mesure le temps de gélification sous irradiation UV et en l'absence d'irradiation (dans le noir). Le temps de gélification dans le noir constitue une indication de la stabilité des mélanges.

Les résultats sont reportés dans le tableau IX.

**TABLEAU IX**

| Mélange n° | Composition (parties en poids) | | | | | | | | | |
|---|---|---|---|---|---|---|---|---|---|---|
| | PETMP | XDI | Agent d'activation | | | | | Agent photoamorceur | Temps de gélification | Temps de gélification |
| | | | 1 | 2 | 3 | 4 | 5 | | | |
| | | | | | | | | Darocure® 1173 | sous U.V. | dans le noir (stabilité) |
| 18 | 56,5 | 43,5 | 0,3 | - | - | - | - | 0,3 | < 10 s | < 1 minute |
| 19 | 56,5 | 43,5 | - | 0,3 | - | - | - | 0,3 | < 10 s | < 1 minute |
| 20 | 56,5 | 43,5 | - | - | 0,3 | - | - | . 0,3 | 30s | 2 heures |
| 21 | 56,5 | 43,5 | - | - | - | 0,3 | - | 0,3 | 60 | > 1 jour |
| 22 | 56,5 | 43,5 | - | - | - | - | 0,3 | 0,3 | 90 s | > 1 jour |
| Agent d'activation 1 Tris(4-méthoxyphényl)phosphine 2 Tris (4-méthylphényl)phosphine 3 Triphénylphosphine 4 Tris(4-chlorophényl)phosphine 5 Tris(4-fluorophényl)phosphine | | | | | | | | | | |

Les résultats montrent que les phosphines comportant des groupes phényles substitués par des groupes attracteurs d'électrons (chloro et fluoro) conduisent à des mélanges plus stables sans modification importante de la réactivité sous irradiation U.V. comparées aux phosphines comportant des groupes phényles substitués par des groupes donneurs d'électrons (méthoxy et méthyle).

## Revendications

1. Composition photopolymérisable comprenant au moins un monomère photopolymérisable à proton labile et au moins un monomère polymérisable comportant un ou plusieurs groupes fonctionnels iso(thio)cyanatE et un agent photoamorceur, **caractérisée en ce qu'**elle comprend en outre un agent d'activation de l'agent photoamorceur choisi parmi les phosphines, les halogénures de phosphore et leurs mélanges.

2. Composition selon la revendication 1, **caractérisée en ce que** les phosphines répondent à la formule (R)₃₋ₓPHₓ (I), dans laquelle les radicaux R, identiques ou différents, représentent un radical alkyle linéaire ou ramifié, un radical cycloalkyle non-substitué ou substitué, un radical alcényle linéaire ou ramifié, un radical cycloalcényle non-substitué ou substitué, un radical aryle non-substitué ou substitué, un radical (alkyl)aryle non-substitué ou substitué, un radical (aryl)alkyle non-substitué ou substitué, et x est un entier de 0 à 2.

3. Composition selon la revendication 2, **caractérisée en ce que** R est choisi parmi les radicaux alkyle linéaires ou ramifiés en C₁-C₆, les radicaux alcényle linéaires ou ramifiés en C₁-C₆, les radicaux aryle substitués ou non-substitués en C₆-C₁₄, les radicaux (alkyl C₁-C₆) aryle en C₆-C₁₄, et les radicaux (aryl C₆-C₁₄) substitués ou non-substitués, alkyle en C₁-C₆.

4. Composition selon la revendication 2, **caractérisée en ce que** R est un groupe phényle substitué par au moins un groupe attracteur d'électrons.

5. Composition selon la revendication 3, **caractérisée en ce que** R est choisi parmi les radicaux méthyle, éthyle, vinyle, allyle, phényle, p-tolyle, p-éthylphényle, p-propylphényle, p-méthoxyphényle, p-chlorophényle et p-fluorophényle.

6. Composition selon l'une quelconque des revendications 2 à 5, **caractérisée en ce que** x est égal à 0 ou 1, de préférence égal à 0.

7. Composition selon la revendication 6, **caractérisée en ce que** les phosphines sont choisies parmi la triméthylphosphine, la triéthylphosphine, la diphénylvinylphosphine, la diphénylallyl phosphine, la diphénylpropylphosphine, la triphénylphosphine, la diphényl(p-tolyl)phosphine, la tris(4-chlorophényl)phosphine, la tris(4-fluorophényl)phosphine, la tris(4-méthoxyphényl)phosphine et leurs mélanges.

8. Composition selon la revendication 1 ou 2, **caractérisée en ce que** les phosphines sont des tri(aryl)phosphines.

9. Composition selon la revendication 1, **caractérisée en ce que** l'halogénure de phosphore est un trihalogénure de phosphore.

10. Composition selon la revendication 9, **caractérisée en ce que** le trihalogénure de phosphore est le tribromure de phosphore.

11. Composition selon l'une quelconque des revendications précédentes, **caractérisée en ce que** le ou les monomères à proton labile sont choisis parmi les polythiols, les polyols et les polyamines primaires ou secondaires et leurs mélanges.

12. Composition selon la revendication 11, **caractérisée en ce que** le ou les monomères à proton labile sont choisis parmi les polythiols.

13. Composition selon la revendication 12, **caractérisée en ce que** le polythiol comporte deux ou plus fonctions thiols.

14. Composition selon l'une quelconque des revendications précédentes, **caractérisée en ce que** le ou les monomères à proton labile sont exempts de groupement insaturé polymérisable par voie radicalaire.

15. Composition selon l'une quelconque des revendications précédentes, **caractérisée en ce que** les polythiols sont choisis parmi les polythiols de formule (II) : 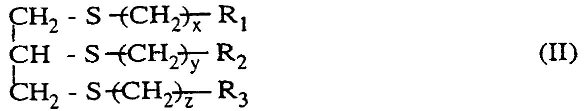 dans laquelle, R₁, R₂, R₃ identiques ou différents, représentent un radical H ou SH, x, y et z sont des entiers compris entre 0 et 8, bornes incluses, à la condition qu'au moins deux de R₁, R₂ et R₃ représentent un groupe SH,
et les polythiols de formule (III) : 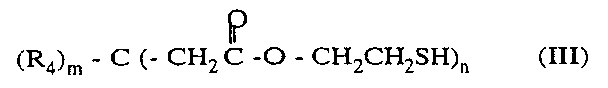 dans laquelle R₄ représente un groupe méthyle, propyle, chloro- ou bromométhyle, m est en entier compris entre 0 et 2, bornes incluses, et n est égal à 4-m.

16. Composition selon l'une quelconque des revendications précédentes, **caractérisée en ce que** le monomère ou les monomères à groupes fonctionnels iso(thio)cyanate comprennent deux ou plus fonctions iso(thio)cyanate.

17. Composition selon l'une quelconque des revendications précédentes, **caractérisée en ce que** le ou les monomères à groupes fonctionnels iso(thio)cyanate sont des polyisocyanates.

18. Composition selon l'une quelconque des revendications 1 à 16, **caractérisée en ce que** le monomère ou les monomères à groupes fonctionnels sont des polyisocyanates aromatiques.

19. Composition selon la revendication 18, **caractérisée en ce que** le polyisocyanate répond à la formule (IV) : 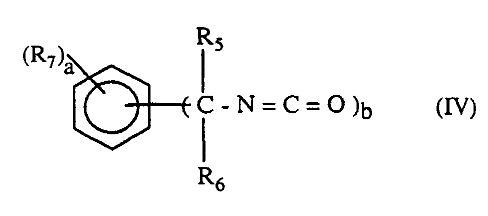 dans laquelle R₅, R₆ identiques ou différents, représentent H ou CH₃, R₇ représente H, Cl, Br, CH₃ ou C₂H₅, et a est un entier de 1 à 4, et b est un entier de 2 et 4, la somme de a+b étant égale à 6.

20. Composition selon l'une quelconque des revendications précédentes, **caractérisée en ce que** le ou les monomères à groupes fonctionnels iso(thio)cyanate sont exempts de groupement insaturé polymérisable par voie radicalaire.

21. Composition selon l'une quelconque des revendications précédentes, **caractérisée en ce qu'**elle comprend en outre un ou plusieurs monomères additionnels polymérisables, comportant un ou plusieurs groupes insaturés réactifs.

22. Composition selon l'une quelconque des revendications précédentes, **caractérisée en ce que** le ou les monomères polymérisables à proton labile représentent 30 à 70% en poids des monomères polymérisables présents dans la composition.

23. Composition selon l'une quelconque des revendications précédentes, **caractérisée en ce que** le ou les monomères polymérisables comportant des fonctions iso(thio)cyanate représentent de 30 à 70% en poids des monomères polymérisables présents dans la composition.

24. Composition selon l'une quelconque des revendications précédentes, **caractérisée en ce que** le ou les monomères additionnels à groupes insaturés réactifs sont présents à raison de 0 à 40% en poids par rapport au poids total des monomères photopolymérisab les présents dans la composition.

25. Composition selon la revendication 24, **caractérisée en ce que** le ou les monomère(s) additionnel(s) à groupes insaturés réactifs sont présents à raison de 0 à 5% en poids par rapport au poids total des monomères photopolymérisables présents dans la composition.

26. Composition selon la revendication 25, **caractérisée en ce que** le ou les monomère(s) additionnel(s) à groupes insaturés réactifs sont absents de ladite composition.

27. Composition selon l'une quelconque des revendications précédentes, **caractérisée en ce que** l'agent photoamorceur est constitué par un ou plusieurs photoamorceurs du type photoclivable ou photoactivable.

28. Composition selon la revendication 27, **caractérisée en ce que** les agents photoclivables sont choisis parmi les dérivés d'acétophénone, la benzoïne et les dérivés de benzoïne, les oxydes de phosphine, les dérivés de benzoyloxime, le benzile et leurs mélanges.

29. Composition selon la revendication 27, **caractérisée en ce que** les agents photoactivables sont choisis parmi la benzophénone et les dérivés de benzophénone, les dérivés de benzyle, les dérivés de xanthone, les dérivés d'anthrone, les dérivés de thioxanthone, les dérivés de fluorénone, les dérivés de subérone, les acides phosphine et leurs mélanges.

30. Composition selon l'une quelconque des revendications précédentes, **caractérisée en ce que** l'agent photoamorceur est présent à raison de 0,01 à 0,5% en poids par rapport au poids total des monomères polymérisables présents dans la composition.

31. Composition selon l'une quelconque des revendications précédentes, **caractérisée en ce que** l'agent d'activation est présent à raison de 0,01 à 0,5% en poids par rapport au poids total des monomères polymérisables présents dans la composition.

32. Composition selon l'une quelconque des revendications précédentes, **caractérisée en ce qu'**elle ne comprend aucun catalyseur de condensation classique des uréthanes ou des thiouréthanes.

33. Article d'optique obtenu par moulage et photopolymérisation d'une composition selon l'une quelconque des revendications 1 à 31.

34. Article d'optique selon la revendication 33, **caractérisé en que** l'article est une lentille ophtalmique.

## Patentansprüche

1. Photopolymerisierbare Zusammensetzung, umfassend mindestens ein photopolymerisierbares Monomer mit einem leicht abspaltbaren Proton und mindestens ein photopolymerisierbares Monomer mit einer oder mehreren funktionellen Iso(thio)cyanat-Gruppen und einen Photoinitiator, **dadurch gekennzeichnet, dass** sie ferner ein Aktivierungsmittel für den Photoinitiator ausgewählt aus den Phosphinen, Phosphorhalogeniden und ihren Mischungen umfasst.

2. Zusammensetzung nach Anspruch 1, **dadurch gekennzeichnet, dass** die Phosphine der Formel (R)₃₋ₓPHₓ (I) entsprechen, in welcher die Reste R, identisch oder verschieden, einen linearen oder verzweigten Alkylrest, einen gegebenenfalls substituierten Cycloalkylrest, einen linearen oder verzweigten Alkenylrest, einen gegebenenfalls substituierten Cycloalkenylrest, einen gegebenenfalls substituierten Arylrest, einen gegebenenfalls substituierten (Alkyl)arylrest, einen gegebenenfalls substituierten (Aryl)alkylrest darstellen und x eine ganze Zahl zwischen 0 und 2 ist.

3. Zusammensetzung nach Anspruch 2, **dadurch gekennzeichnet, dass** R ausgewählt wird aus linearen oder verzweigten C₁-C₆-Alkylresten, linearen oder verzweigten C₁-C₆-Alkenylresten, gegebenenfalls substituierten C₆-C₁₄-Arylresten, (C₁-C₆-Alkyl)-C₆-C₁₄arylresten und gegebenenfalls substituierten (C₆-C₁₄-Aryl)-C₁-C₆-alkylresten.

4. Zusammensetzung nach Anspruch 2, **dadurch gekennzeichnet, dass** R eine Phenylgruppe ist, subsituiert mit mindestens einer elektronenanziehenden Gruppe.

5. Zusammensetzung nach Anspruch 3, **dadurch gekennzeichnet, dass** R ausgewählt wird aus Methyl-, Ethyl-, Vinyl-, Allyl-, Phenyl-, p-Tolyl-, p-Ethylphenyl-, p-Propylphenyl-, p-Methoxyphenyl-, p-Chlorphenyl- und p-Fluorphenylresten.

6. Zusammensetzung nach einem der Ansprüche 2 bis 5, **dadurch gekennzeichnet, dass** x gleich 0 oder 1 ist, vorzugsweise gleich 0.

7. Zusammensetzung nach Anspruch 6, **dadurch gekennzeichnet, dass** die Phosphine im Allgemeinen ausgewählt werden aus Trimethylphosphin, Triethylphosphin, Diphenylvinylphosphin, Diphenylallylphosphin, Diphenylpropylphosphin, Triphenylphosphin, Diphenyl-(p-tolyl)-phosphin, Tris-(4-chlorphenyl)-phosphin, Tris-(4-fluorphenyl)-phosphin, Tris-(4-methoxyphenyl)-phosphin und ihren Mischungen.

8. Zusammensetzung nach Anspruch 1 oder 2, **dadurch gekennzeichnet, dass** die Phosphine Triarylphosphine sind.

9. Zusammensetzung nach Anspruch 1, **dadurch gekennzeichnet, dass** das Phosphorhalogenid ein Phosphortrihalogenid ist.

10. Zusammensetzung nach Anspruch 9, **dadurch gekennzeichnet, dass** das Phosphortrihalogenid Phosphortribromid ist.

11. Zusammensetzung nach einem der vorhergehenden Ansprüche, **dadurch gekennzeichnet, dass** das oder die Monomere mit leicht abspaltbarem Proton ausgewählt werden aus Polythiolen, Polyolen und primären oder sekundären Polyaminen und ihren Mischungen.

12. Zusammensetzung nach Anspruch 11, **dadurch gekennzeichnet, dass** das oder die Monomere mit leicht abspaltbarem Proton ausgewählt werden aus den Polythiolen.

13. Zusammensetzung nach Anspruch 12, **dadurch gekennzeichnet, dass** das Polythiol zwei oder mehr Thiolfunktionen enthält.

14. Zusammensetzung nach einem der vorhergehenden Ansprüche, **dadurch gekennzeichnet, dass** das oder die Monomere mit leicht abspaltbarem Proton frei von ungesättigten, radikalisch polymerisierbaren Gruppen sind.

15. Zusammensetzung nach einem der vorhergehenden Ansprüche, **dadurch gekennzeichnet, dass** die Polythiole ausgewählt werden aus den Polythiolen mit der Formel (II): 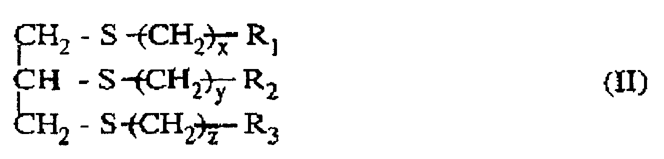 in welchen R₁, R₂ und R₃, identisch oder verschieden, einen Rest H oder SH darstellen, x, y, und z ganze Zahlen zwischen 0 und 8 sind, einschließlich der Grenzen, unter der Bedingung, dass mindestens zwei von R₁, R₂ und R₃ eine SH-Gruppe darstellen,
und aus den Polythiolen mit der Formel (III): 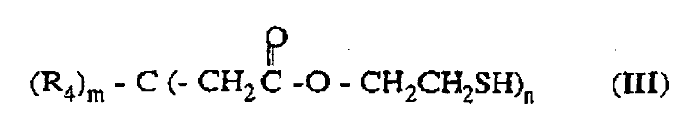 in welchen R₄ eine Methyl-, Propyl-, Chlor- oder Brommethylgruppe darstellt, m eine ganze Zahl zwischen 0 und 2 ist, einschließlich der Grenzen, und n gleich 4-m ist.

16. Zusammensetzung nach einem der vorhergehenden Ansprüche, **dadurch gekennzeichnet, dass** das Monomer oder die Monomere mit funktionellen Iso(thio)cyanat-Gruppen zwei oder mehr Iso(thio)cyanat-Funktionen enthalten.

17. Zusammensetzung nach einem der vorhergehenden Ansprüche, **dadurch gekennzeichnet, dass** das oder die Monomere mit funktionellen Iso(thio)cyanat-Gruppen Polyisocyanate sind.

18. Zusammensetzung nach einem der Ansprüche 1 bis 16, **dadurch gekennzeichnet, dass** das Monomer oder die Monomere mit funktionellen Gruppen aromatische Polyisocyanate sind.

19. Zusammensetzung nach Anspruch 18, **dadurch gekennzeichnet, dass** das Polyisocyanat der Formel (IV) entspricht: 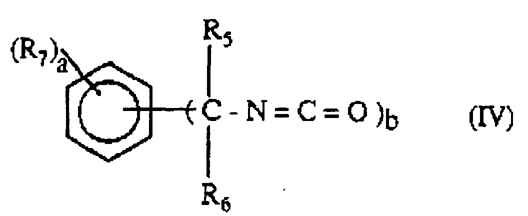 in welcher R₅ und R₆, identisch oder verschieden, H oder CH₃ darstellen, R₇ H, Cl, Br, CH₃ oder C₂H₅ darstellt und a eine ganze Zahl zwischen 1 und 4 ist und b eine ganze Zahl zwischen 2 und 4 ist, wobei die Summe von a + b gleich 6 ist.

20. Zusammensetzung nach einem der vorhergehenden Ansprüche, **dadurch gekennzeichnet, dass** das oder die Monomere mit funktionellen Iso(thio)cyanat-Gruppen frei von ungesättigten, radikalisch polymerisierbaren Gruppen sind.

21. Zusammensetzung nach einem der vorhergehenden Ansprüche, **dadurch gekennzeichnet, dass** sie ferner ein oder mehrere zusätzliche polymerisierbare Monomere mit einer oder mehreren reaktiven ungesättigten Gruppen enthält.

22. Zusammensetzung nach einem der vorhergehenden Ansprüche, **dadurch gekennzeichnet, dass** das oder die polymerisierbaren Monomere mit leicht abspaltbarem Proton 30 bis 70 Gew.-% der in der Zusammensetzung vorliegenden polymerisierbaren Monomere darstellen.

23. Zusammensetzung nach einem der vorhergehenden Ansprüche, **dadurch gekennzeichnet, dass** das oder die polymerisierbaren Monomere mit Iso(thio)cyanat-Funktionen 30 bis 70 Gew.-% der in der Zusammensetzung vorliegenden polymerisierbaren Monomere darstellen.

24. Zusammensetzung nach einem der vorhergehenden Ansprüche, **dadurch gekennzeichnet, dass** das oder die zusätzlichen Monomere mit reaktiven ungesättigten Gruppen in einem Bereich von 0 bis 40 Gew.-% bezogen auf das Gesamtgewicht der in der Zusammensetzung vorliegenden photopolymerisierbaren Monomere darstellen.

25. Zusammensetzung nach Anspruch 24, **dadurch gekennzeichnet, dass** das oder die zusätzliche(n) Monomer(e) mit reaktiven ungesättigten Gruppen in einem Bereich von 0 bis 5 Gew.-% bezogen auf das Gesamtgewicht der in der Zusammensetzung vorliegenden photopolymerisierbaren Monomere darstellen.

26. Zusammensetzung nach Anspruch 25, **dadurch gekennzeichnet, dass** das oder die zusätzliche(n) Monomer(e) mit reaktiven ungesättigten Gruppen in dieser Zusammensetzung nicht vorkommen.

27. Zusammensetzung nach einem der vorhergehenden Ansprüche, **dadurch gekennzeichnet, dass** der Photoinitiator aus einem oder mehreren Photoinitiatoren vom Typ photospaltbar oder photoaktivierbar besteht.

28. Zusammensetzung nach Anspruch 27, **dadurch gekennzeichnet, dass** die photospaltbaren Mittel ausgewählt werden aus Acetophenonderivaten, Benzoin und Benzoinderivaten, Phosphinoxiden, Benzoyloximderivaten, Benzil und ihren Mischungen.

29. Zusammensetzung nach Anspruch 27, **dadurch gekennzeichnet, dass** die photoaktivierbaren Mittel ausgewählt werden aus Benzophenon und Benzophenonderivaten, Benzylderivaten, Xanthonderivaten, Anthronderivaten, Thioxanthonderivaten, Fluorenonderivaten, Suberonderivaten, Phosphinsäuren und ihren Mischungen.

30. Zusammensetzung nach einem der vorhergehenden Ansprüche, **dadurch gekennzeichnet, dass** der Photoinitiator mit 0,01 bis 0,5 Gew.-% bezogen auf das Gesamtgewicht der in der Zusammensetzung vorliegenden polymerisierbaren Monomere vorliegt.

31. Zusammensetzung nach einem der vorhergehenden Ansprüche, **dadurch gekennzeichnet, dass** das Aktivierungsmittel mit 0,01 bis 0,5 Gew.-% bezogen auf das Gesamtgewicht der in der Zusammensetzung vorliegenden polymerisierbaren Monomere vorliegt.

32. Zusammensetzung nach einem der vorhergehenden Ansprüche, **dadurch gekennzeichnet, dass** sie keinen Katalysator für die herkömmliche Kondensation von Urethanen oder Thiourethanen umfasst.

33. Optischer Gegenstand, erhalten mittels Formpressen und Photopolymerisieren einer Zusammensetzung nach einem der Ansprüche 1 bis 31.

34. Optischer Gegenstand nach Anspruch 33, **dadurch gekennzeichnet, dass** der Gegenstand eine ophthalmische Linse ist.

## Claims

1. Photopolymerizable composition comprising at least one photopolymerizable monomer which is a labile proton and at least one polymerizable monomer comprising one or more iso(thio)cyanate functional groups and a photoinitiating agent, **characterized in that** it comprises moreover an agent for activating the photoinitiating agent selected from phosphines, phosphorus halides and their mixtures.

2. Composition according to claim 1, **characterized in that** the phosphines have the formula (R)₃₋ₓPHₓ (I), in which the R radicals, which are identical or different, represent a linear or branched alkyl radical, an unsubstituted or substituted cycloalkyl radical, a linear or branched alkenyl radical, an unsubstituted or substituted cycloalkenyl radical, an unsubstituted or substituted aryl radical, an unsubstituted or substituted (alkyl)aryl radical or an unsubstituted or substituted (aryl)alkyl radical and x is an integer from 0 to 2.

3. Composition according to claim 2, **characterized in that** R is selected from linear or branched C₁-C₆ alkyl radicals, linear or branched C₁-C₆ alkenyl radicals, substituted or unsubstituted C₆-C₁₄ aryl radicals, C₆-C₁₄ (C₁-C₆ alkyl) aryl radicals and substituted or unsubstituted (C₆-C₁₄ aryl) C₁-C₆ alkyl radicals.

4. Composition according to claim 2, **characterized in that** R is a phenyl group substituted by at least one electron-removal group.

5. Composition according to claim 3, **characterized in that** R is selected from methyl, ethyl, vinyl, allyl, phenyl, p-tolyl, p-ethylphenyl, p-propylphenyl, p-methoxyphenyl, p-chlorophenyl and p-fluorophenyl radicals.

6. Composition according to anyone of claims 2 to 5, **characterized in that** the x is equal to 0 or 1, preferably equal to 0.

7. Composition according to claim 6, **characterized in that** the phosphines are selected from trimethylphosphine, triethylphosphine, diphenylvinylphosphine, diphenylallylphosphine, diphenylpropylphosphine, triphenylphosphine, diphenyl(p-tolyl)phosphine, tris(4-chlorophenyl)phosphine, tris(4-fluorophenyl)phosphine, tris(4-methoxyphenyl)phosphine and their mixtures.

8. Composition according to claims 1 or 2, **characterized in that** the phosphines are tri(aryl)phosphines.

9. Composition according to claim 1, **characterized in that** the phosphorus halide is a phosphorus trihalide.

10. Composition according to claim 9, **characterized in that** the phosphorus trihalide is phosphorus tribromide.

11. Composition according to anyone of the preceding claims, **characterized in that** the monomer or monomers in which a labile proton are selected from polythiols, polyols and primary and secondary polyamines and their mixtures.

12. Composition according to claim 11, **characterized in that** the monomer or monomers in which a labile proton are selected from polythiols.

13. Composition according to claim 12, **characterized in that** the polythiol comprises two or more thiol functional groups.

14. Composition according to anyone of the preceding claims, **characterized in that** the monomer or monomers in which a labile proton are free of an unsaturated group polymerizable by the radical route.

15. Composition according to anyone of the preceding claims, **characterized in that** the polythiols are selected from polythiols of formula (II) : 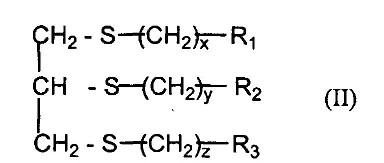 in which R₁, R₂ and R₃ which are identical or different, represent an H or SH radical and x, y and z are integers between 0 and 8 inclusive, with the condition that at least two from R₁, R₂ and R₃ represent an SH group,
and polythiols of formula (III) : 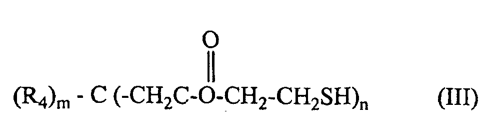 in which R₄ represents a methyl, propyl, chloro- or bromomethyl group, m is an integer between 0 and 2 inclusive and n is equal to 4-m.

16. Composition according to anyone of the preceding claims, **characterized in that** the monomer or the monomers with iso(thio)cyanate functional groups comprise two or more iso(thio)cyanate functional groups.

17. Composition according to anyone of the preceding claims, **characterized in that** the monomer or the monomers with iso(thio)cyanate functional groups are polyisocyanates.

18. Composition according to anyone of claims 1 to 16, **characterized in that** the monomer or the monomers with functional groups are aromatic polyisocyanates.

19. Composition according to claim 18, **characterized in that** the polyisocyanate has the formula (IV) : 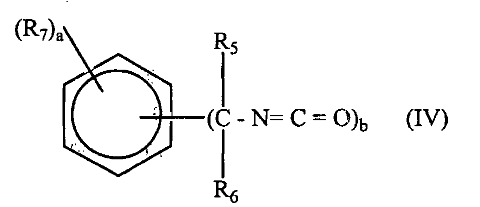 in which R₅ and R₆, which are identical or different, represent H or CH₃, R₇ represents H, Cl, Br, CH₃, or C₂H₅, and a is an integer from 1 to 4 and b is an integer from 2 to 4, the sum of a+b being equal to 6.

20. Composition according to anyone of the preceding claims, **characterized in that** the monomer or the monomers with iso(thio)cyanate functional groups are free of an unsaturated group polymerizable by the radical route.

21. Composition according to anyone of the preceding claims, **characterized in that** it comprises furthermore one or more additional polymerizable monomers comprising one or more reactive unsaturated groups.

22. Composition according to anyone of the preceding claims, **characterized in that** the polymerizable monomer or monomers with a labile proton represent 30 to 70% by weight of the polymerizable monomers present in the composition.

23. Composition according to anyone of the preceding claims, **characterized in that** the polymerizable monomer or monomers comprising iso(thio)cyanate functional groups represent from 30 to 70% by weight of the polymerizable monomers present in the composition.

24. Composition according to anyone of the preceding claims, **characterized in that** the additional monomer or monomers with reactive unsaturated groups is/are present in a proportion of 0 to 40% by weight based on the total weight of the photopolymerizable monomers present in the composition.

25. Composition according to the claim 24, **characterized in that** the additional monomer(s) with reactive unsaturated groups is/are present in a quantity of 0 to 5% by weight based on the total weight of the photopolymerizable monomers present in the composition.

26. Composition according to the claim 25, **characterized in that** the additional monomer(s) with reactive unsaturated groups is/are absent from the said composition.

27. Composition according to anyone of the preceding claims, **characterized in that** the photoinitiating agent is composed of one or more photoinitiators of the photocleavable or photoactivable type.

28. Composition according to the claim 27, **characterized in that** the photocleavable agents are selected from acetophenone derivatives, benzoin and benzoin derivatives, phosphine oxides, benzoyloxime derivatives, benzil and their mixtures.

29. Composition according to the claim 27, **characterized in that** the photoactivable agents are selected from benzophenone and benzophenone derivatives, benzil derivatives, xanthone derivatives, anthrone derivatives, thioxanthone derivatives, fluorenone derivatives, suberone derivatives, phosphine acids and their mixtures.

30. Composition according to anyone of the preceding claims, **characterized in that** the photoinitiating agent is present in a proportion of 0.01 to 0.5% by weight based on the total weight of the polymerizable monomers present in the composition.

31. Composition according to anyone of the preceding claims, **characterized in that** the activating agent is present in a quantity of 0.01 to 0.5% by weight based on the total weight of the polymerizable monomers present in the composition.

32. Composition according to anyone of the preceding claims, **characterized in that** it does not comprise any conventional catalyst for the condensation of urethanes or thiourethanes.

33. Optical article obtained by molding and photopolymerization of a composition according to anyone of claims 1 to 31.

34. Optical article according to claim 33, **characterized in that** the article is an ophthalmic lens.
